# EUROPEAN PATENT SPECIFICATION

(11) **EP 1 643 210 B1**
(45) Date of publication and mention of the grant of the patent: **02.07.2008**
(21) Application number: 05254894.8
(22) Date of filing: 05.08.2005
(51) Int. Cl.: G01B 11/25

(54) **Method and apparatus for measuring shape of an object**
Verfahren und Vorrichtung zum Messen der Form eines Objekts
Procédé et dispositif pour mesurer la forme d'un objet

(30) Priority: 30.09.2004 US 955637
(43) Date of publication of application: 05.04.2006
(73) Proprietor: GENERAL ELECTRIC COMPANY, Schenectady, NY 12345 (US)
(72) Inventor: Hu, Qingying, Clifton Park New York 12065 (US); Harding, Kevin George, Niskayuna New York 12309 (US)
(74) Representative: Pedder, James Cuthbert

(56) References cited:
- WO-A-97/36144
- US-A- 5 636 025
- ZENG L ET AL: "SIMULTANEOUS MEASUREMENT OF THE POSITION AND SHAPE OF A SWIMMING FISH BY COMBINING A FRINGE PATTERN PROJECTION METHOD WITH A LASER SCANNING TECHNIQUE" OPTICAL ENGINEERING, SOC. OF PHOTO-OPTICAL INSTRUMENTATION ENGINEERS. BELLINGHAM, US, vol. 37, no. 5, May 1998 (1998-05), pages 1500-1504, XP000777077 ISSN: 0091-3286
- TAN S ET AL: "A tracking fringe method for measuring the shape and position of a swimming fish" OPTICS COMMUNICATIONS, NORTH-HOLLAND PUBLISHING CO. AMSTERDAM, NL, vol. 173, no. 1-6, January 2000 (2000-01), pages 123-128, XP004191521 ISSN: 0030-4018
- PATENT ABSTRACTS OF JAPAN vol. 2000, no. 05, 14 September 2000 (2000-09-14) & JP 2000 046534 A (FUJI PHOTO OPTICAL CO LTD), 18 February 2000 (2000-02-18)

## Description

The present invention relates generally to optical metrology, and more specifically to a three-dimensional shape measurement technique using encoded fringe patterns.

Metrology is the science of measurement and is an important aspect of manufacturing. Non-contact shape measurement of a three-dimensional object is an important aspect of metrology and optical methods play an important role in this field. Optical three-dimensional shape measurement techniques can be broadly classified into two techniques: scanning techniques and non-scanning techniques. An example of a scanning technique is laser radar. In this technique, the laser radar detects the shape of an object by scanning a laser beam over the surface of the object. The reflected light from the object is then used to create a model of the object. Scanning methods, such as laser radar, are usually time-consuming because they require either one-dimensional or two-dimensional scanning to cover the entire surface of the object.

Non-scanning techniques of measuring three-dimensional surfaces typically are faster than scanning techniques. Furthermore, image processing for retrieving three-dimensional contour information is relatively straightforward. One example of a non-scanning technique is the fringe projection method. The fringe projection method is a method of performing three-dimensional shape measurements by projecting a fringe pattern on the object to be measured. A camera, or some other image detection device, captures the modulated fringe pattern, that is, the image of the projected fringe pattern from the surface of the object. These images are then processed to construct a three-dimensional shape of the object.

The fringe projection method can be used with both large objects (in several meter scale in one measurement) and small objects (in micrometer scale). A phase-shifting technique may also be utilized with the fringe detection method. Some of the advantages of phase shifting techniques are high measurement accuracy, in the order of 1/1000 of a wave, a rapid measurement capability, and good results with low-contrast fringes. In phase-shifting techniques, algorithms are used to establish a phase map from the images of the modulated fringe patterns from the object captured by the camera. Typically, phase wrapping and phase unwrapping have to be performed to obtain a continuous phase map, and, therefore, a three-dimensional shape. Traditional phase-shifting measurement systems obtain a wrapped phase map with repetitive phase values from 0 to 360 degrees. However, there is no starting or ending point on the phase map, which makes completing the modeling process almost impossible.

Thus, there exists a need for an improved method for enhancing measurement accuracy in non-contact three-dimensional shape measurement methods using non-scanning technique. More specifically, there is a need for improving three-dimensional fringe projection methods to address the problem described above.

S. Tam et al 'A Tracking Fringe Method for Measuring the Shape and Position of a Swimming Fish', Optics Communications, vol. 173, no. 1-6, Jan 2000, pages 123 to 128 discloses combining a fringe pattern projection method and a laser tracking technique. A fringe pattern projection system and a laser tracking system are provided. The range function of the separate tracking system needs to be calibrated to the fringe projection system using correlation coefficients.

Briefly, in accordance with the invention, the present technique provides a system for measuring a shape of an object. The system comprises a projection system operable to project a fringe pattern having a reference mark onto the object by a single projection device. The system further comprises an image-processing system operable to capture an image of the fringe pattern modulated by the object. The image-processing system is further operable to identify the reference mark in the image of the fringe pattern to construct a shape of the object based on the reference mark.

The present invention further provides a method for measuring a shape of an object. The method comprises projecting encoded fringe patterns having a mark onto the object by a single projection device. Then the mark is identified in a phrase-wrapped image of the encoded fringe patterns modulated by the object. The method further comprises establishing an absolute coordinate system for the phase-wrapped image using the mark as a reference point for the absolute coordinate system.

The invention will now be described in greater detail, by way of example, with reference to the drawings, in which:-
Figure 1 is a diagrammatic representation of an encoded fringe projection shape measuring system, in accordance with an exemplary embodiment of the present technique;
Figure 2 is a diagrammatic representation of a fringe projection system, in accordance with an exemplary embodiment of the present technique;
Figure 3 is a diagrammatic representation of a fringe projection system, in accordance with an alternative embodiment of the present technique;
Figure 4 is an image of an encoded fringe pattern, in accordance with an exemplary embodiment of the present technique;
Figure 5 is a block diagram of a process for measuring a shape of an object, in accordance with an exemplary embodiment of the present technique; and
Figure 6 is a diagrammatic representation of an encoded fringe projection system for biometric scanning, in accordance with an exemplary embodiment of the present technique.

The present technique is generally directed towards encoded fringe projection techniques for measuring a shape of an object and to generate useful images and data for industrial applications. These techniques utilize projecting an encoded fringe pattern on an object, capturing and processing an image or images of the projected encoded fringe pattern to reconstruct three-dimensional shape of the object. The present techniques may also be applied in other areas such as biometric scanning for establishing the identity of a person for security purposes.

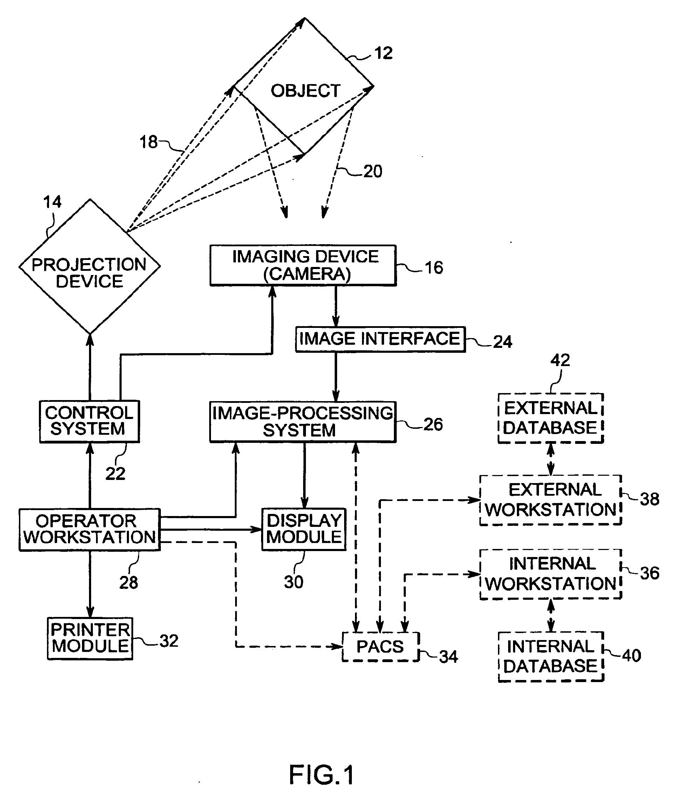

Turning now to the drawings, and referring first to Figure 1, an exemplary embodiment of an encoded fringe projection measurement system 10 is provided. The encoded fringe projection measurement system 10 is operable to measure the shape of a three-dimensional object 12. The illustrated encoded fringe projection measurement system 10 comprises an encoded fringe projection device 14 and an imaging device 16. The encoded fringe projection device 14 is operable to project an encoded fringe pattern 18 onto the object 12. The fringe pattern is encoded with a distinguishing feature or mark. The mark may be a separate mark, a distinctive fringe pattern, or some other type of reference point identifier that may be projected onto the object 12. In addition, the encoded fringe projection device 14 also is operable to shift the phase of the encoded fringe pattern. The encoded fringe projection device 14 may comprise an interferometer, a diffraction grating system, a holographic grating system, a digital fringe projection system, or some other type of projection system operable to project the encoded fringe patterns with various phase shifts onto the object 12.

The imaging device 16 of the encoded fringe projection measurement system 10 is operable to detect the image of encoded fringe pattern 20 modulated by the object 12. The imaging device 16 may be a charge coupled device (CCD) camera or a complementary metal oxide semiconductor (CMOS) camera. Further the camera may be of digital or analog type. In this embodiment, the encoded fringe projection measurement system 10 also comprises a control system 22 that is operable to control the operations of the encoded fringe projection device 14 and the imaging device 16.

An image interface 24 is provided that serves as an interface between the imaging device 16 and an image-processing system 26. The image interface 24 may be a frame grabber that is operable to record a single digital frame of an analog or digital video information out of a sequence of many frames. The image interface 24 may receive signals from the imaging device 16 and convert the signals into frames. The frames may then be provided to the image-processing system 26. The image-processing system 26 is operable to process the image(s) to establish a phase map or phase-wrapped image of the object 12. The image-processing system 26 computes a phase value for every camera pixel. The phase map is unwrapped to reconstruct the shape of the object 12.

The image-processing system 26 and the control system 22 may be coupled to an operator workstation 28, or a similar computing device. The image-processing system 26 may be configured to receive commands and imaging parameters from the operator workstation 28. The operator workstation 28 may comprise input devices such as a keyboard, a mouse, and other user interaction devices (not shown). The operator workstation 28 can be used to customize various settings for measuring the shape of the object, and for effecting system level configuration changes. Hence an operator may thereby control the system 10 via the operator workstation 28.

The operator workstation 28 may further be connected to a display module 30 and to a printer module 32. The display module 30 may be configured to display the three-dimensional shape of the object. The printer module 32 may be used to produce a hard copy of the images. Further the operator workstation 28 may also be connected to a picture archiving system (PACS) 34 to archive the images. The PACS may in turn be connected to an internal workstation 36 and/or an external workstation 38 through networks so that people at different locations may gain access to the images and image data. The encoded fringe projection measurement system 10 may also send and receive data to and from an internal database 40 through the internal workstation 36. Similarly the system 10 may also send and receive data to and from external database 42 through the external workstation 38. As will be appreciated by those skilled in the art, the system 10 may be either used to measure a shape of an object or be used to compare the measured shape of an object with an existing database.

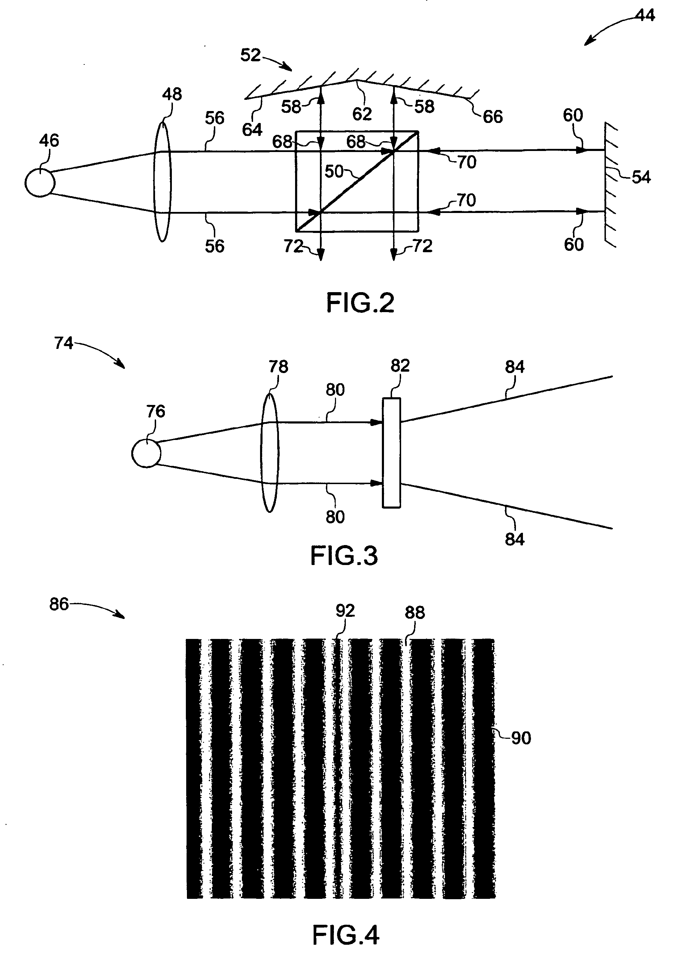

Referring generally to Figure 2, an interferometer 44 is provided as an example of a fringe projection imaging system operable to generate an encoded fringe pattern. The interferometer 44 is configured to combine two beams of light to produce a fringe pattern. The interferometer 44 comprises a light source 46, a collimating lens 48, a beam-splitter 50, a folded mirror 52, and a flat mirror 54. The light source 46 is operable to produce a light beam 56. As shown, the beam-splitter 50 is positioned at an angle of approximately forty-five degrees and is coated with a material that reflects approximately one-half of the light and transmits the remaining light. The light beam 56 travels through the collimating lens 48 towards the beam-splitter 50. The light beam 56 from the light source 46 is split so that a first portion of light 58 is reflected towards the folded mirror 52. The second portion of light 60 is transmitted through the beam-splitter 50 towards the flat mirror 54. The folded mirror 52 has a split 62 and two sections 64 and 66 that are kept at an angle to each other. The first portion of light 58 is reflected by the folded mirror 52 and the second portion of light 60 is reflected by the flat mirror 54 back towards the beam-splitter 50. The reflected beam 68 of the first portion 58 and the reflected beam 70 of the second portion of light 60 interfere with each other at the beam-splitter 50 and form a fringe pattern 72. The split 62 in the moving mirror 52 causes a mark to be produced in the fringe pattern 72. A shift in the position of folded mirror 52 or flat mirror 54 by a half-wave length distance may cause the fringe pattern to shift by one fringe. This method is applied for phase shifting techniques.

Referring generally to Figure 3, a diffraction grating system 74 is provided as an additional example of a fringe projection system that is operable to generate an encoded fringe pattern. Diffraction is a phenomenon by which wave fronts of propagating waves bend in the neighborhood of obstacles. A diffraction grating is a set of parallel slits used to disperse light using diffraction. In the diffraction grating system 74, a light source 76 and a collimating lens 78 are provided to direct light 80 towards a diffraction grating 82. The diffraction grating 82 may be a reflective or, as illustrated, a transparent substrate and comprise an array of fine, parallel, equally spaced grooves. These grooves result in diffraction and mutual interference, which ultimately result in a fringe pattern 84. In a typical diffraction grating, all of the grooves or slits are parallel and in an equal distribution. As a result, the lines of the fringe pattern that is produced are parallel and equal. However, in this embodiment, the grooves are not provided in an equal distribution so that the lines of the fringe pattern that is produced are not in an equal distribution.

Referring generally to Figure 4, an example of an encoded fringe pattern 86 is provided. It comprises a bright interference line 88, dark interference lines 90, and a narrower dark interference line 92 that serves as a mark 92. The mark 92 thereby serves as a reference point for the fringe pattern 86. If not, the fringe pattern 86 would appear as nothing more than a series of parallel lines.

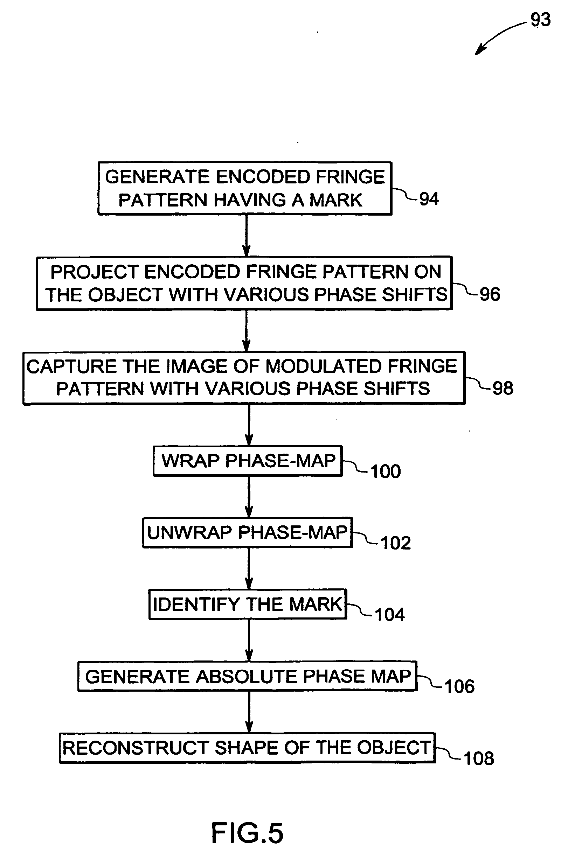

Referring generally to Figure 5, a process for measuring the shape of a three-dimensional object using an encoded fringe pattern is provided, and referenced generally by reference numeral 93. In this process, an encoded fringe pattern is generated, as represented by block 94. The encoded fringe pattern is then projected onto an object with various phase shifts, as represented by block 96. Phase shifting techniques are employed to project encoded fringe patterns with various phase shifts, ranging from 0 degree to 360 degrees, onto the object. The image of the projected encoded fringe pattern with various phase shifts, modulated by the surface of the object is captured by an imaging device, as represented by block 98. The angle at which the projection device projects the encoded fringe pattern and the angle at which the imaging device captures the image of the modulated encoded fringe pattern are different. In order to compensate for this difference in angles, the coordinates of the image of the modulated fringe pattern may be transformed.

The number of phase-shifted images obtained may vary. Typically, a wrapped phase map is computed by solving phase-shifted reference images at various phase angles, as represented by block 100. The wrapped phase map has cyclic values between -π radians to +π radians. The wrapped phase maps are unwrapped to produce a continuous change in phase value to represent a terrain, as represented by block 102. The wrapped phase map may be unwrapped by adding or subtracting 2π radians at every jump of value from 2π radians to 0 or from 0 to 2π radians. The unwrapped phase map is visually similar to a contour map. From the unwrapped phase map both magnitude and direction of displacement can be extracted. Then the mark is identified in the unwrapped phase map, as represented by block 104. An absolute phase map is generated based on the mark identified in the unwrapped phase map from the encoded fringe pattern, as represented by block 106. Then coordinates may be calculated in the absolute coordinate system without any distortion to build a model or to reconstruct a shape of the object, as represented by block 108.

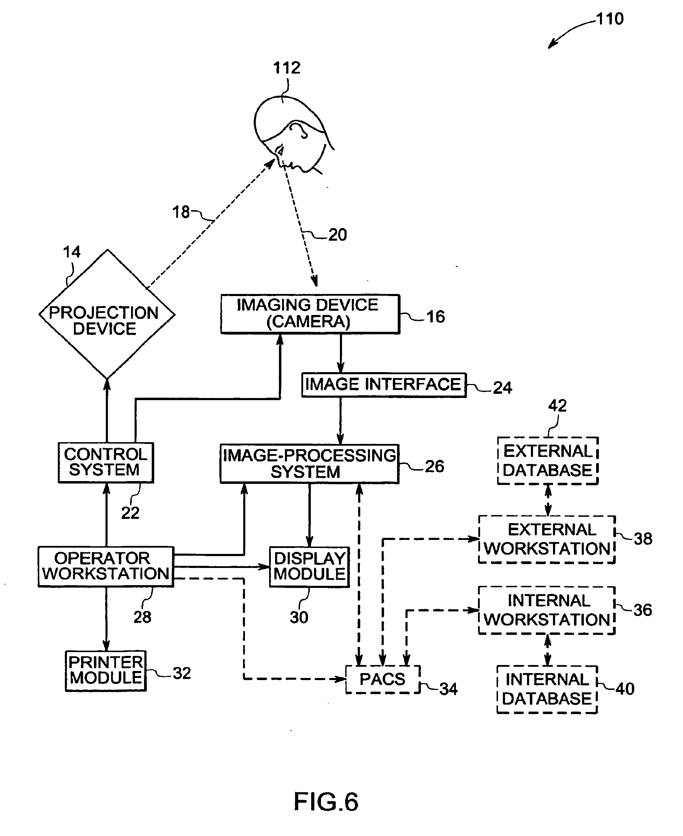

Referring generally to Figure 6, a biometric scanning system 110 that may be used to perform a biometric scan of a person 112 is illustrated. The biometric scanning may be iris (eye) scanning, fingerprint scanning, or some other technique that may be used to establish the identity of the person 112. The system 110 is substantially similar to the system 10 discussed in Figure 1 and the process steps for performing biometric scanning are also substantially similar to the process 93 described in Figure 5. The system 110 may be either used to capture biometric information or be used to compare the captured biometric information with an existing database.

As will be also appreciated, the above-described techniques may take the form of computer or controller implemented processes and apparatuses for practicing those processes. The above-described technique can also be embodied in the form of computer program code containing instructions for measuring a shape of an object. The computer program code may be embodied in tangible media, such as floppy diskettes, CD-ROMs, hard drives, or any other computer-readable storage medium. The computer program code is loaded into and executed by a computer or controller; the computer becomes an apparatus for practicing the technique. The disclosure may also be embodied in the form of computer program code or signal, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

While only certain features of the invention have been illustrated and described herein, many modifications and changes will occur to those skilled in the art. It is, therefore, to be understood that the invention is defined solely by the appended claims.

## Claims

1. A three-dimensional shape measurement system (10), the system comprising:
a projection system (14) operable to project a fringe pattern (18) having a reference mark onto a three-dimensional object (12); and
an image-processing system (26) operable to capture an image (20) of the fringe pattern (18) modulated by the three-dimensional object (12), wherein the image-processing system (26) is operable to identify the reference mark in the image of the fringe pattern modulated by the three-dimensional object (12) and to establish a coordinate system using the reference mark as a reference point to reconstruct the shape of the three-dimensional object (12), **characterized in that** the fringe pattern (18) and the reference mark are projected by a single projection device (14) onto the three-dimensional object (12).

2. The system of claim 1, wherein the projection system (14) is operable to project a plurality of fringe patterns (18) with a plurality of phase shifts.

3. The system of claim 1, wherein the image-processing system (26) is operable to capture an image (20) of the fringe pattern having the reference mark modulated by the three-dimensional object (12), wherein the image-processing system (26) is operable to generate a phase-wrapped image of the three-dimensional object (12) using the image of the fringe pattern having the reference mark modulated by the three-dimensional object (12).

4. The system of claim 3, wherein the image-processing system (26) is operable to identify the reference mark in the phase-wrapped image and to use the reference mark as the reference point for the coordinate system.

5. The system of claim 4, wherein the image-processing system (26) is operable to unwrap the phase-wrapped image using the coordinate system based on the reference mark.

6. The system of claim 1, wherein the projection system (14) comprises an interferometer.

7. The system of claim 1, wherein the projection system (14) comprises a diffraction grating.

8. The system of claim 1, wherein the projection system (14) comprises a digital fringe projection system.

9. The system of claim 1, further comprising a control system (22) configured to control an operation of the projection system (14) to project a plurality of fringe patterns having the reference mark with a plurality of phase shifts onto the three-dimensional object (12).

10. A three-dimensional shape measurement method, the method comprising:
projecting encoded fringe patterns (18) with a reference mark on an object (12) by a single projecting device (14);
capturing images (20) of the encoded fringe patterns with the reference mark modulated by the object (12);
generating a phase-wrapped image of the object (12) using the images of the encoded fringe patterns with the reference mark modulated by the object;
identifying the reference mark in the phase-wrapped image of the object (12); and
unwrapping the phase-wrapped image of the encoded fringe patterns modulated by the object (12) using the reference mark as a reference point to form an un-wrapped image.

## Patentansprüche

1. Dreidimensionales Form-Messsystem (10), wobei das System umfasst:
ein Projektionssystem (14), das dazu in der Lage ist, ein Interferenzmuster (18) mit einer Referenzmarke auf ein dreidimensionales Objekt (12) zu projizieren, und
ein Bildverarbeitungssystem (26) zur Erfassung eines Bildes (20) des Interferenzmusters (18), moduliert durch das dreidimensionale Objekt (12), wobei das Bildverarbeitungssystem (26) zum Erkennen der Referenzmarke in dem durch das dreidimensionale Objekt (12) modulierte Bild des Interferenzmusters in der Lage ist, und zur Festlegung eines Koordinatensystems, das die Referenzmarke als einen Bezugspunkt nutzt, um die Form des dreidimensionalen Objekts (12) zu rekonstruieren, **dadurch gekennzeichnet, dass** das Interferenzmuster (18) und die Referenzmarke durch eine einzige Projektionsvorrichtung (14) auf das dreidimensionale Objekt (12) projiziert werden.

2. System nach Anspruch 1, wobei das Projektionssystem (14) in der Lage ist, eine Vielzahl Interferenzmuster mit einer Vielzahl von Phasenverschiebungen zu projizieren.

3. System nach Anspruch 1, wobei das Bildverarbeitungssystem (26) in der Lage ist, ein Bild (20) des Interferenzmusters mit der durch das dreidimensionale Objekt (12) modulierten Referenzmarke zu erfassen, wobei das Bildverarbeitungssystem (26) in der Lage ist, eine gefaltete Phasenkarte (phase-wrapped map) des dreidimensionalen Objektes (12) zu generieren, und zwar unter Verwendung des Bildes des Interferenzmusters mit der durch das dreidimensionale Objekt (12) modulierten Referenzmarke.

4. System nach Anspruch 3, wobei das Bildverarbeitungssystem (26) in der Lage ist, die Referenzmarke in der gefalteten Phasenkarte zu erkennen und die Referenzmarke als Bezugspunkt für das Koordinatensystem zu benutzen.

5. System nach Anspruch 4, wobei das Bildverarbeitungssystem (26) in der Lage ist, die gefaltete Phasenkarte unter Verwendung des auf der Referenzmarke basierenden Koordinatensystems zu "entfalten" (unwrap).

6. System nach Anspruch 1, wobei das Projektionssystem (14) ein Interferometer enthält.

7. System nach Anspruch 1, wobei das Projektionssystem (14) ein Beugungsgitter enthält.

8. System nach Anspruch 1, wobei das Projektionssystem (14) ein Digitales Interferenz-Projektionssystem ("Digital-Fringe"-Projektionssystem) enthält.

9. System nach Anspruch 1, ferner ein Steuersystem (22) umfassend, das dafür konfiguriert ist, den Betrieb des Projektionssystems (14)- die Projektion einer Vielzahl von die Referenzmarke enthaltenden Interferenzmustern mit einer Vielzahl von Phasenverschiebungen auf das dreidimensionale Objekt (12) - zu steuern.

10. Messverfahren für dreidimensionale Formen, wobei das Verfahren umfasst:
die Projektion kodierter Interferenzmuster (18) mit einer Referenzmarke auf ein Objekt (12) durch eine einzige Projektionsvorrichtung (14);
die Erfassung von Bildern (20) der kodierten Interferenzmuster mit der durch das Objekt (12) modulierten Referenzmarke;
die Erzeugung einer gefalteten Phasenkarte des Objektes (12) unter Verwendung der Bilder der kodierten Interferenzmuster mit der durch das Objekt modulierten Referenzmarke;
das Erkennen der Referenzmarke in der gefalteten Phasenkarte des Objektes (12) und
das "Entfalten" der gefalteten Phasenkarte der durch das Objekt (12) modulierten Interferenzmuster unter Verwendung der Referenzmarke als Bezugspunkt für die Bildung eines "entfalteten" Bildes.

## Revendications

1. Système de mesure de forme en trois dimensions (10), le système comprenant:
un système de projection (14) utilisable pour projeter un réseau de franges (18) comportant une marque de référence sur un objet tridimensionnel (12); et
un système de traitement d'image (26) utilisable pour saisir une image (20) du réseau de franges (18) modulé par l'objet tridimensionnel (12), dans lequel le système de traitement d'image (26) est utilisable pour identifier la marque de référence dans l'image du réseau de franges modulé par l'objet tridimensionnel (12) et pour établir un système de coordonnées utilisant la marque de référence comme point de référence afin de reconstruire la forme de l'objet tridimensionnel (12), **caractérisé en ce que** le réseau de franges (18) et la marque de référence sont projetés par un seul dispositif de projection (14) sur l'objet tridimensionnel (12).

2. Système selon la revendication 1, dans lequel le système de projection (14) est utilisable pour projeter une pluralité de réseaux de franges (18) avec une pluralité de déphasages.

3. Système selon la revendication 1, dans lequel le système de traitement d'image (26) est utilisable pour saisir une image (20) du réseau de franges comportant la marque de référence modulé par l'objet tridimensionnel (12), dans lequel le système de traitement d'image (26) est utilisable pour générer une image à phase repliée de l'objet tridimensionnel (12) en utilisant l'image du réseau de franges comportant la marque de référence modulé par l'objet tridimensionnel (12).

4. Système selon la revendication 3, dans lequel le système de traitement d'image (26) est utilisable pour identifier la marque de référence dans l'image à phase repliée et pour utiliser la marque de référence comme point de référence pour le système de coordonnées.

5. Système selon la revendication 4, dans lequel le système de traitement d'image (26) est utilisable pour déplier l'image à phase repliée en utilisant le système de coordonnées basé sur la marque de référence.

6. Système selon la revendication 1, dans lequel le système de projection (14) comprend un interféromètre.

7. Système selon la revendication 1, dans lequel le système de projection (14) comprend un réseau de diffraction.

8. Système selon la revendication 1, dans lequel le système de projection (14) comprend un système numérique de projection de franges.

9. Système selon la revendication 1, comprenant en outre un système de commande (22) configuré pour commander le fonctionnement du système de projection (14) afin de projeter une pluralité de réseaux de franges comportant la marque de référence avec une pluralité de déphasages sur l'objet tridimensionnel (12).

10. Procédé de mesure de forme en trois dimensions, le procédé comprenant:
la projection de réseaux de franges codés (18) avec une marque de référence sur un objet (12) par un seul dispositif de projection (14);
la saisie d'images (20) des réseaux de franges codés avec la marque de référence modulés par l'objet (12);
la génération d'une image à phase repliée de l'objet (12) en utilisant les images des réseaux de franges codés avec la marque de référence modulés par l'objet;
l'identification de la marque de référence dans l'image à phase repliée de l'objet (12); et
le dépliement de l'image à phase repliée des réseaux de franges codés modulés par l'objet (12) en utilisant la marque de référence comme point de référence afin de former une image dépliée.
